# FASCICULE DE BREVET EUROPEEN

(11) **EP 3 629 413 B1**
(45) Date de publication et mention de la délivrance du brevet: **21.12.2022**
(21) Numéro de dépôt: 19199889.7
(22) Date de dépôt: 26.09.2019
(51) Int. Cl.: H01M 10/0565, H01M 4/131, H01M 4/1391, H01M 4/525, H01M 10/0525, H01M 4/583, H01M 4/36

(54) **ÉLECTROLYTE GÉLIFIÉ, PROCÉDÉ DE PRÉPARATION ET UTILISATION DE L'ÉLECTROLYTE GÉLIFIÉ**
GELELEKTROLYT, VERFAHREN FÜR DIE HERSTELLUNG UND VERWENDUNG DES GELELEKTROLYTEN
GEL ELECTROLYTE, METHOD FOR PREPARATION AND USE OF THE GEL ELECTROLYTE

(30) Priorité: 28.09.2018 FR 1858964
(43) Date de publication de la demande: 01.04.2020
(73) Titulaire: Commissariat à l'Energie Atomique et aux Energies Alternatives, 75015 Paris (FR)
(72) Inventeur: GUERIN, Camille, 38054 GRENOBLE CEDEX 09 (FR); GEBEL, Gérard, 38054 GRENOBLE CEDEX 09 (FR); PICARD, Lionel, 38054 GRENOBLE CEDEX 09 (FR)
(74) Mandataire: Nony

(56) Documents cités:
- FR-A1- 2 843 757
- FR-A1- 3 011 000
- US-A1- 2016 087 306
- US-A1- 2017 018 800
- DATABASE WPI Week 201747 Thomson Scientific, London, GB; AN 2017-42276H XP002789771, & WO 2017/101849 A1 (HITACHI CHEM CO LTD) 22 juin 2017 (2017-06-22)

## Description

La présente invention se rapporte à un nouveau procédé de préparation d'un électrolyte gélifié, directement en surface d'une électrode dédiée à être mise en oeuvre dans un système de stockage électrochimique, ainsi qu'à un ensemble électrode/membrane électrolytique gélifiée ainsi obtenu.

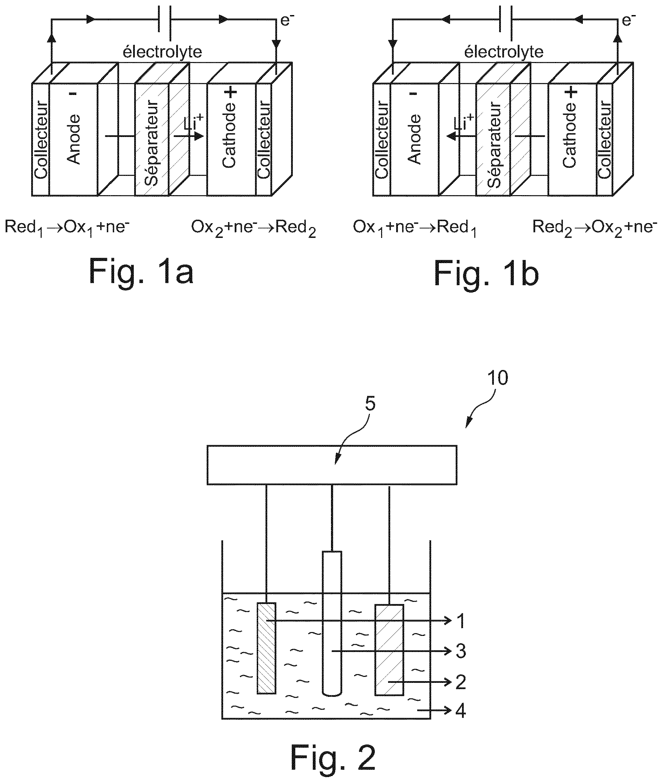

D'une manière générale, comme représenté schématiquement en figure 1, une batterie au lithium comprend les éléments suivants :
- un collecteur de courant de l'électrode positive, généralement en aluminium ;
- une électrode positive, comprenant un matériau d'insertion/désinsertion des cations lithium. Il s'agit généralement d'un composite poreux comprenant ledit matériau actif d'insertion/désinsertion des ions et des additifs conducteurs électroniques dans une matrice polymérique poreuse ;
- un constituant électrolytique. Il s'agit plus particulièrement d'un film polymérique poreux, le séparateur, imbibé d'un électrolyte organique ;
- une électrode négative. Elle peut être un composite poreux dans la technologie lithium-ion ou un film de lithium dans le cas de la technologie lithium-métal ; et
- un collecteur de courant de l'électrode négative, généralement en cuivre.

Le matériau d'insertion du cation lithium de l'électrode positive est généralement un matériau composite, par exemple du phosphate de fer lithié, LiFePO₄, ou un oxyde de métaux de transition, par exemple un oxyde de cobalt lithié (LiCoO₂), oxyde de nickel (LiNiO₂), etc.

La présence de l'électrolyte permet d'assurer le transport des ions lithium entre les électrodes pendant la charge et la décharge de la batterie. Il s'agit généralement d'un mélange de solvant(s) organique(s), généralement de type carbonates d'alkyles, dans lequel est dissous un sel de lithium, typiquement le LiPF₆. Malheureusement, les températures de fusion et d'ébullition des solvants, ainsi que la réactivité du sel LiPF₆, limitent la gamme de températures dans laquelle la batterie est opérationnelle. De plus, les solvants des électrolytes liquides sont généralement inflammables. Lors d'emballements thermiques, il existe un risque de fuites, pouvant mener à des incendies, voire des explosions.

Pour pallier ces inconvénients, la technologie des électrolytes solides s'est développée. L'électrolyte liquide peut être remplacé par un polymère solide, présentant des propriétés de conduction ionique et d'isolation électrique. Il joue ainsi le rôle à la fois d'électrolyte et de séparateur. Le plus connu et le plus utilisé à l'heure actuelle est le poly(oxyde d'éthylène) (PEO), dans lequel est solvaté un sel de lithium, développé et breveté par Armand *et al.* en 1978. Son utilisation permet avantageusement d'améliorer les températures d'opération et la sécurité des batteries.

Cependant, une des limitations majeures des électrolytes polymères demeure leurs faibles conductivités ioniques à température ambiante. Pour pallier ce problème, des électrolytes polymères gélifiés ont déjà été proposés. Ces électrolytes sous forme d'un gel (par définition un liquide emprisonné dans une matrice solide), comprennent ainsi l'électrolyte (solvant aprotique liquide contenant le sel de lithium) au sein d'une matrice polymère. Les risques de fuites sont réduits du fait de leur comportement solide. La migration a lieu dans la phase liquide du gel, permettant d'atteindre des conductivités ioniques à température ambiante proches de celles des électrolytes liquides classiques.

Deux voies de synthèse des électrolytes polymères sous la forme d'un film sont typiquement mises en oeuvre. La première est l'extrusion, technique bien connue dans la plasturgie. La seconde opère par dissolution du polymère dans un solvant, enduction sur une surface place, puis séchage. Une fois les films d'électrolytes polymères formés, ils sont laminés à la surface de l'électrode lors de l'assemblage des cellules électrochimiques. Les épaisseurs des films électrolytes polymériques déposés sont de l'ordre du micromètre.

Malgré tout, les solvants utilisés restent généralement des carbonates, des produits inflammables et toxiques. Des composés alternatifs à ces solvants ont ainsi été proposés, permettant de former un gel avec la matrice polymère, en particulier des composés cristallins plastiques (« plastic crystal »), tels que des composés dinitrile comme décrit dans la demande WO 2017/032940. Au sein d'un réseau cristallin régulier, ces composés ont un mouvement dynamiquement désordonné. La mobilité des molécules est plus importante dans les systèmes désordonnés, ce qui permet un transport des ions Li⁺ plus rapide et donc une meilleure conductivité ionique même à température ambiante.

La présente invention propose une nouvelle voie de synthèse d'un électrolyte polymère gélifié, en procédant directement à la préparation de l'électrolyte en surface de l'électrode destinée à une batterie au lithium, et permettant avantageusement de s'affranchir de l'utilisation de solvant.

Plus précisément, la présente invention propose d'accéder à un ensemble électrode/membrane électrolytique gélifiée *via* la préparation, directement en surface d'une électrode destinée à une batterie au lithium, d'un film polymérique électro-greffé, obtenu à partir d'un monomère liquide ionique dont le cation est porteur d'au moins une fonction électro-polymérisable.

Ainsi, l'invention concerne, selon un premier de ses aspects, un procédé de fonctionnalisation de la surface électriquement conductrice ou semi-conductrice d'une électrode, en particulier d'une électrode destinée à une batterie au lithium, notamment une électrode lithiée, par électro-greffage d'un film polymérique obtenu à partir d'un monomère liquide ionique dont le cation est porteur d'au moins une fonction électro-polymérisable.

Elle concerne encore une structure, telle qu'obtenue à l'issue du procédé tel que défini précédemment, comprenant une électrode présentant une surface électriquement conductrice ou semi-conductrice, sur laquelle est greffé de manière covalente un film polymérique, obtenu par électro-polymérisation à partir d'un monomère liquide ionique dont le cation est porteur d'au moins une fonction électro-polymérisable.

L'électro-polymérisation est une technique connue pour réaliser des films organiques minces sur des surfaces conductrices ou semi-conductrices de l'électricité. Parmi les techniques d'électro-polymérisation, l'électro-greffage permet d'accéder à des films de polymères greffés de manière covalente à la surface d'intérêt. D'une manière générale, l'électro-greffage repose sur la génération de radicaux en solution (initiation), par échange d'électrons entre le substrat et un monomère électro-actif dissous dans un électrolyte, et la polymérisation, par propagation en chaîne, des monomères électro-actifs sur la surface d'intérêt, jouant à la fois le rôle d'électrode dans la cellule d'électrolyse et celui d'amorceur de polymérisation.

L'électro-greffage requiert l'utilisation de précurseurs adaptés à son mécanisme d'initiation par réduction et de propagation, en général anionique. L'électro-greffage initié cathodiquement est préféré, car applicable sur les métaux nobles et non nobles (contrairement à l'électro-greffage par polarisation anionique qui n'est applicable que sur des substrats nobles). Les molécules « vinyliques appauvries », c'est-à-dire porteuses de groupements fonctionnels électro-attracteurs, comme les acrylonitriles, les acrylates, les vinyl-pyridines, etc., sont particulièrement adaptées à ce procédé qui donne lieu à de nombreuses applications dans le domaine de la microélectronique ou du biomédical.

L'invention tire ainsi profit de la technique d'électro-greffage pour accéder à un film électriquement isolant, électro-greffé à la surface d'une électrode utile dans une batterie au lithium, en particulier d'une électrode lithiée.

De manière avantageuse, l'électro-greffage permet d'accéder à un film de faible épaisseur, uniforme et couvrant sur toute surface électriquement conductrice et semi-conductrice, et d'épaisseur contrôlée.

Un tel film électro-greffé peut être avantageusement converti en un électrolyte gélifié *via* l'ajout d'un solvant de gélification adéquat et d'un sel de lithium.

Ainsi, l'invention concerne encore, selon un autre de ses aspects, un procédé de préparation d'une membrane électrolytique gélifiée en surface d'une électrode, de préférence d'une électrode lithiée, comprenant au moins les étapes suivantes :
(a) disposer d'une électrode, de préférence une électrode lithiée, sur laquelle est greffé de manière covalente un film polymérique isolant électrique, obtenu par électro-polymérisation à partir d'un monomère liquide ionique dont le cation est porteur d'au moins une fonction électro-polymérisable ; et
(b) gélifier le film polymérique par ajout d'une solution de sel de lithium dans un composé dinitrile de formule N=C-R-C=N, dans laquelle R est un groupement hydrocarboné CₙH₂ₙ, n étant un nombre entier compris entre 1 et 6, ou dans un ou plusieurs solvants tels que des carbonates.

L'invention concerne encore un ensemble électrode/membrane électrolytique, tel qu'obtenu selon le procédé décrit précédemment, comprenant une électrode, de préférence une électrode lithiée, supportant une membrane électrolytique gélifiée, obtenue selon le procédé défini précédemment.

La préparation, selon le procédé de l'invention, d'une membrane électrolytique gélifiée directement en surface d'une électrode, en particulier d'une électrode lithiée destinée à une batterie au lithium, à partir d'un film polymérique électro-greffé à la surface de l'électrode, s'avère avantageuse à plusieurs titres.

Tout d'abord, de manière avantageuse, la synthèse de la membrane électrolyte polymère directement en surface de l'électrode, est opérée à partir d'un film polymérique électro-greffé, autrement dit faisant intervenir l'établissement d'une liaison covalente entre le polymère et la surface de l'électrode. Elle assure ainsi une interface intime entre l'électrode et la membrane électrolyte formée, et une forte adhérence de la membrane électrolytique gélifiée à l'électrode. Dès lors, les résistances de contact entre les deux composants électrode/membrane électrolytique sont avantageusement minimisées.

Également, l'électro-greffage permet d'ajuster, en particulier, de minimiser l'épaisseur du film polymérique formé et, en conséquence, l'épaisseur de la membrane électrolytique gélifiée obtenue.

Comme détaillé dans la suite du texte, l'électro-greffage peut être ainsi réalisé par polarisation en conditions de voltampérométrie cyclique, en ajustant les conditions opératoires, notamment en termes de valeur du potentiel maximum imposé, de vitesse de balayage, de nombre de cycles de balayage et/ou de température du milieu d'électrolyse, pour contrôler les propriétés du film polymérique formé, en particulier son épaisseur.

En particulier, l'épaisseur de la membrane électrolytique gélifiée obtenue selon l'invention peut être inférieure ou égale à 500 nm, en particulier comprise entre 50 nm et 300 nm et plus particulièrement comprise entre 100 nm et 150 nm. Une faible épaisseur de l'électrolyte au sein d'une batterie permet avantageusement de réduire les chemins de diffusion ionique lors du fonctionnement de la batterie, et ainsi de conserver une faible résistance de migration.

Par ailleurs, la technique de l'électro-greffage permet de conduire à un film continu et uniforme, en particulier d'épaisseur homogène, et ce, quelle que soit la forme de l'électrode et plus particulièrement quelle que soit sa topographie de surface. Ainsi, le procédé de l'invention peut être mis en oeuvre en surface d'une électrode plane mais encore pour des électrodes 3D de type mousse.

L'électro-greffage assure également un dépôt couvrant du film polymérique isolant électrique, permettant ainsi d'éviter tout risque de court-circuit au sein de la batterie formée à l'issue de la gélification du film électro-greffé.

La membrane électrolytique gélifiée préparée selon l'invention présente ainsi à la fois d'excellentes propriétés de conductivité ionique et d'isolation électronique. Elle assure à la fois sa fonction électrolytique au sein d'une batterie au lithium, et une fonction séparatrice entre l'électrode, généralement la cathode, sur laquelle elle est formée, et l'électrode opposée, typiquement l'anode.

Qui plus est, la préparation de la membrane électrolytique gélifiée en surface de l'électrode selon l'invention s'affranchit de la mise en oeuvre de solvants inflammables et toxiques.

De fait, comme détaillé dans la suite du texte, l'électro-greffage et la gélification sont réalisés sans ajout de solvant, l'électro-greffage étant opéré dans une solution électrolytique dans laquelle ledit liquide ionique joue à la fois la fonction de monomère et de solvant. La gélification du film électro-greffé est quant à elle réalisée à l'aide d'un composé cristallin plastique, de type dinitrile, et ne requiert pas l'ajout de solvant annexe.

L'invention concerne encore, selon un autre de ses aspects, l'utilisation d'un ensemble électrode/membrane électrolytique préparé selon l'invention dans une batterie au lithium, en particulier dans une batterie lithium-ion.

Elle concerne encore une batterie au lithium, en particulier une batterie lithium-ion, comprenant un ensemble électrode/membrane électrolytique selon l'invention.

D'autres caractéristiques, variantes et avantages de l'invention ressortiront mieux à la lecture de la description détaillée et des exemples, donnés en référence aux dessins annexés sur lesquels :
- la figure 1 représente, de manière schématique et partielle, le principe de fonctionnement d'une batterie conventionnelle au lithium, lors de la décharge (a) et de la charge (b) ;
- la figure 2 représente, de manière schématique et partielle, le montage électrochimique à trois électrodes, pour opérer l'électro-polymérisation à partir de la solution électrolytique comprenant le monomère (liquide ionique) à polymériser.
- la figure 3 représente, de manière schématique, les différents mécanismes d'électro-polymérisation du N,N,N,N-n-butyldiméthylméthacryloyloxyéthylammonium *bis*(trifluorométhanesulfonyl)imide (BDMA).
- la figure 4 est un graphique illustrant l'évolution de la conductivité ionique (log de la conductivité en mS.cm⁻¹) en fonction de la température (1000/K pour l'abscisse inférieure et °C pour l'abscisse supérieure) pour les différents électrolytes préparés selon l'exemple 1 ;
- la figure 5 représente les voltampérogrammes obtenus avec le montage d'électro-polymérisation selon l'exemple 2, pour le premier cycle de balayage de potentiel entre l'OCV ("Open Circuit Voltage" ou courant à vide) et -3V vs Ag⁺/Ag⁰, à une vitesse de balayage de 0,1 mV.s⁻¹ (figure 5-a) et lors des 20 premiers cycles de balayage de potentiel entre l'OCV et -2,25V vs Ag⁺/Ag⁰, à une vitesse de balayage de 1 mV.s⁻¹ (figure 5-b) ;
- la figure 6 représente les voltampérogrammes obtenus avec le montage d'électro-polymérisation selon l'exemple 3, pour un premier cycle de balayage de potentiel entre l'OCV et -2,25V vs Ag⁺/Ag⁰, à une vitesse de balayage de 1 mV.s⁻¹, à différentes températures de la solution électrolytique ; et lors des trente premiers cycles de balayage à une température de 60°C.
- la figure 7 représente les différents voltampérogrammes obtenus avec le montage électrochimique selon l'exemple 4, avec différentes électrodes de travail : une électrode de Ni/LiNiO₂ nue dans une solution électrolytique ne contenant pas de sonde RedOx, une électrode de Ni/LiNiO₂ nue après ajout de la sonde RedOx et une électrode de Ni/LiNiO₂ sur laquelle l'électro-greffage a été réalisé suivant les conditions de l'exemple 3, à 25 °C (figure 7-a), 40°C (figure 7-b) et 60°C (figure 7-c).
- la figure 8 représente les voltampérogrammes obtenus avec le montage d'électro-polymérisation selon l'exemple 5, pour un premier cycle de balayage de potentiel entre l'OCV et -2,25V vs Ag⁺/Ag⁰, à 60 °C et pour différentes vitesses de balayage de 1 mV.s⁻¹, 10 mV.s⁻¹ et 100 mV.s⁻¹.
- la figure 9 représente les différents voltampérogrammes obtenues avec le montage électrochimique selon l'exemple 5, avec différentes électrodes de travail : une électrode de Ni/LiNiO₂ nue dans une solution électrolytique ne contenant pas de sonde RedOx, une électrode de Ni/LiNiO₂ nue après ajout de la sonde RedOx et une électrode de Ni/LiNiO₂ sur laquelle l'électro-greffage a été réalisé suivant les conditions de l'exemple 5, à 100 mV/s (figure 9-a), 10 mV/s (figure 9-b) et 1 mV/s (figure 9-c) ;
- la figure 10 représente le voltampérogramme obtenu avec le montage d'électro-polymérisation selon l'exemple 6, en surface d'une mousse de nickel/LiNiO₂, réalisée avec un balayage de potentiel entre l'OCV et -2,25V vs Ag⁺/Ag⁰, à une vitesse de balayage de 1 mV.s⁻¹, à 40°C.

Dans la suite du texte, les expressions « compris entre ... et ... », « allant de ... à ... » et « variant de ... à ... » sont équivalentes et entendent signifier que les bornes sont incluses, sauf mention contraire.

Sauf indication contraire, l'expression « comportant un(e) » doit être comprise comme « comprenant au moins un(e) ».

### ELECTRO-GREFFAGE EN SURFACE D'UNE ELECTRODE

Comme indiqué précédemment, la préparation d'une membrane électrolytique selon l'invention, directement en surface d'une électrode, procède, dans un premier temps, à la formation par électro-greffage, en surface d'une électrode, d'un film polymérique, à partir d'un monomère liquide ionique porteur d'au moins une fonction électro-polymérisable.

### Electrode de support

L'électro-greffage peut être mis en oeuvre sur tout type de surface conductrice ou semi-conductrice, pour toute géométrie de surface possible.

Ainsi, le procédé peut être mis en oeuvre sur toute électrode, quelle que soit sa forme et en particulier quelle que soit sa topographie de surface. Il peut s'agir ainsi d'une électrode plane, mais également d'une électrode 3D, à l'image d'une mousse.

Comme indiqué précédemment, l'électrode à la surface de laquelle est formé le film polymérique électro-greffé est plus particulièrement une électrode destinée à une utilisation dans une batterie au lithium, en particulier dans une batterie lithium-ion.

Il s'agit de préférence d'une électrode destinée à former la cathode dans une batterie au lithium.

Typiquement, une électrode comprend, voire est formée d'un matériau actif d'électrode, en particulier lithié, le cas échéant supporté par un substrat conducteur, par exemple un substrat métallique.

Il est entendu que le matériau d'électrode doit être chimiquement et électrochimiquement stable dans les conditions de synthèse par électrolyse mises en oeuvre pour l'électro-greffage du film polymérique.

Également, de préférence, le matériau d'électrode est choisi de manière à présenter une bonne affinité avec le monomère de type liquide ionique mis en oeuvre comme monomère et solvant de la solution électrolytique pour l'électro-polymérisation, afin de favoriser l'adsorption du monomère à sa surface.

L'affinité du monomère liquide ionique avec le matériau d'électrode peut être notamment appréciée par la mouillabilité du liquide ionique vis-à-vis du matériau d'électrode, une bonne mouillabilité d'un milieu liquide vis-à-vis d'un matériau donné s'entendant d'un angle de contact d'une goutte dudit milieu liquide déposée sur un support en ledit matériau, inférieur à 90 °C. La détermination de l'angle de contact peut être opérée, de manière connue de l'homme du métier, à l'aide d'un goniomètre.

Selon un mode de réalisation particulièrement préféré, l'électrode est une électrode lithiée, comprenant un matériau choisi parmi les oxydes lithiés de métaux de transition et d'autres composés lithiés de métaux de transition, tels que des phosphates lithiés de métaux de transition, et les mélanges de ceux-ci.

A titre d'exemples d'oxydes lithiés de métaux de transition, on peut citer les oxydes lamellaires Li(Co, Ni, Mn, Al)O₂ et les oxydes de structure spinelle de type Li₁₊ₓMn₂O₄ avec 0≤x≤0,1.

De préférence, il peut s'agir d'un oxyde de nickel lithié (LiNiO₂).

Le matériau d'électrode peut encore être choisi parmi les composés de formule générale suivante LiₓM_{y}(XO_{z})ₙ,
dans laquelle :
M représente un élément choisi parmi Mn, Fe, Co, Ni, Cu, Mg, Zn, V, Ti, Al, Si, B, Cr, Mo et leurs mélanges ;
X représente un élément choisi parmi P, Si, Ge, S, V et As ;
x, y, z et n sont des nombres entiers ou nombres décimaux positifs choisis de telle sorte que la charge totale des cations compense la charge totale des anions, de sorte à ce que le composé soit électriquement neutre.

De préférence, M représente un élément choisi parmi Mn, Fe, Co, Ni, Cu, V, Ti, B, Cr, Mo et leurs mélanges.

Plus précisément, de tels composés peuvent correspondre au cas où X correspond à l'élément phosphore P, auquel cas ces composés constituent des composés phosphates de lithium. De tels composés peuvent être par exemple, LiFePO₄ ou Li₃V₂(PO₄)₃.

L'électrode mise en oeuvre selon l'invention peut plus particulièrement présenter en surface un film de matériau inorganique lithié, tel que décrit précédemment, en particulier un film d'oxyde lithié de métal de transition, tel que par exemple, un film d'oxyde de nickel lithié (LiNiO₂).

Le film de matériau inorganique lithié peut notamment présenter une épaisseur comprise entre 10 µm et 300 µm , en particulier entre 50 µm et 150 µm.

Dans un mode de réalisation particulier, l'électrode est constituée d'un support plan de métal pur ou oxyde métallique, ou d'une mousse de métal pur ou d'oxyde métalliques, présentant en surface un film d'oxyde lithié de métal de transition.

Par exemple, l'électrode peut être constituée d'un support plan en nickel ou d'une mousse de nickel, présentant en surface un film d'oxyde de nickel lithié (LiNiO₂).

Le matériau actif, en particulier l'oxyde lithié de métal de transition, peut représenter de 50 à 95 %, en particulier de 70 à 90 %, par rapport à la masse totale de l'électrode.

Outre le matériau actif, l'électrode peut comprendre avantageusement au moins un conducteur électronique. Celui peut notamment être du noir de carbone et/ou des fibres de carbone. Il peut représenter de 1 à 10 %, en particulier de 3 à 5 %, de la masse de l'électrode.

L'électrode, en particulier lithiée, à la surface de laquelle est opéré l'électro-greffage du polymère selon l'invention, peut être préalablement préparée par toute technique connue de l'homme du métier.

Elle peut être par exemple fabriquée par dépôt d'une encre d'électrode comprenant le matériau actif d'électrode en surface d'un substrat. Le dépôt peut être réalisé par toute technique conventionnelle, par exemple par enduction, impression (sérigraphie, jet d'encre, etc.) ou par pulvérisation.

### Monomère liquide ionique possédant au moins une fonction électro-polymérisable

Le film polymérique électro-greffé est préparé à partir d'un monomère de type liquide ionique dont le cation est porteur d'au moins une fonction électro-polymérisable/

Par « liquide ionique », on entend un sel se présentant à l'état liquide, un liquide ionique pouvant être représenté par la formule générale (I) suivante :

A⁺X⁻ (I),

dans laquelle :
A⁺ représente un cation, généralement organique ; et
X⁻ représente un anion.

Le cation d'un liquide ionique selon l'invention est plus particulièrement un cation organique porteur d'au moins une fonction polymérisable, et plus particulièrement une fonction électro-polymérisable.

De tels liquides ioniques ont par exemple été décrits dans la demande WO 2015/0441136. Toutefois, ces liquides ioniques ne sont, d'une part, nullement proposés comme précurseurs pour la formation d'un film électro-greffé. D'autre part, les polymères ioniques, issus de la polymérisation de ces liquides ioniques, sont uniquement mis en oeuvre dans ce document pour dissoudre et/ou dissocier le sel de lithium, et donc nullement pour former à eux seuls, sous une forme gélifiée, une membrane électrolytique. Plus particulièrement, les polymères ioniques proposés dans ce document sont mis en oeuvre, dans une composition destinée à former une membrane électrolytique, en combinaison avec un sel de lithium et un polymère non ionique, tel qu'une polyoléfine, destinée à assurer la tenue mécanique de la composition.

Une fonction « électro-polymérisable » entend désigner une fonction polymérisable et électro-active.

Une « fonction polymérisable » est une fonction susceptible de polymériser pour former un polymère résultant d'un enchaînement de motifs répétitifs issus de la polymérisation dudit groupe polymérisable.

Par fonction « électro-active », on entend désigner une fonction apte à être oxydée ou réduite, de préférence réduite, grâce à un courant électrique.

De préférence, la fonction électro-active est une fonction apte à être réduite. Le monomère électro-réduit est l'initiateur de réactions de polymérisation radicalaire.

Ainsi, de préférence, comme détaillé dans la suite du texte, l'électro-greffage est réalisée sous polarisation cathodique, la croissance des chaînes greffées s'effectuant alors par polymérisation anionique ou radicalaire.

Une fonction électro-polymérisable peut présenter plus particulièrement une insaturation. A titre d'exemples de fonction électro-polymérisable, on peut citer le pyrrole, l'acétylène, le thiophène, l'azine, le p-phénylène, le p-phénylène vinylène, le pyrène, le furane, le sélénophène, la pyridazine, le carbazole, l'aniline, l'indole, l'acrylate, les méthacrylates et leurs dérivés.

De préférence, la fonction électro-polymérisable est une fonction vinylique activée, en particulier une fonction méthacrylate.

Comme détaillé dans la suite du texte, la présence d'une fonction électro-polymérisable est indispensable pour permettre un greffage par liaison covalente au niveau de la surface de l'électrode et, d'autre part, pour initier la croissance des chaînes polymériques.

Le cation du liquide ionique, porteur d'une fonction électro-polymérisable, en particulier d'une fonction vinylique activée, peut être symbolisé par la formule générale : 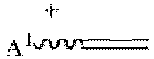 une seule fonction insaturée étant représentée ici par la double liaison =. La liaison ondulée représente une liaison covalente reliant un atome de carbone de la double liaison au groupe A¹. Il n'est pas exclu que d'autres groupes puissent être liés aux atomes de carbone de la double liaison, le parti pris de simplification ayant consisté, ici, à ne représenter que le groupe A¹.

Le cation peut être un composé comportant au moins un atome d'azote, au moins un atome de phosphore ou au moins un atome de soufre, dont la charge positive est portée par ledit atome d'azote, ledit atome de phosphore ou ledit atome de soufre ; cet atome d'azote, de phosphore ou de soufre pouvant appartenir à une chaîne hydrocarbonée linéaire ou ramifiée ou à un cycle hydrocarboné.

En particulier, le cation peut être un composé comportant au moins un atome d'azote, dont la charge positive est portée par ledit atome d'azote, cet atome d'azote pouvant appartenir à une chaîne hydrocarbonée linéaire ou ramifiée ou à un cycle hydrocarboné.

Lorsque l'atome d'azote chargé positivement appartient à une chaîne hydrocarbonée linéaire ou ramifiée, le cation peut être un cation ammonium aliphatique et, plus spécifiquement, peut répondre à la formule générale (II) suivante : 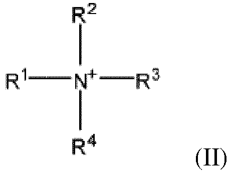 dans laquelle R¹, R², R³ et R⁴ représentent, indépendamment l'un de l'autre, un groupe hydrocarboné, avec l'un au moins des groupes R¹, R², R³ et R⁴ étant un groupe hydrocarboné porteur d'au moins une fonction électro-polymérisable, telle que celle mentionnée ci-dessus.

Lorsqu'il n'est pas un groupe hydrocarboné porteur d'au moins une fonction électro-polymérisable, le groupe hydrocarboné susmentionné peut être un groupe alkyle comprenant de 1 à 12 atomes de carbone, éventuellement fluoré.

Des exemples de tels cations peuvent être ceux de formules générales (III) et (IV) suivantes : 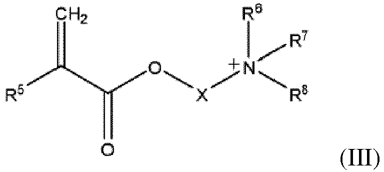 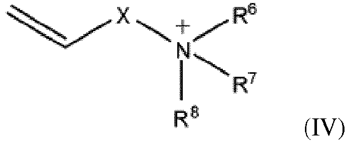 dans lesquelles :
- R⁶, R⁷ et R⁸ représentent, indépendamment l'un de l'autre, un groupe alkyle, éventuellement fluoré, comprenant de 1 à 12 atomes de carbone ;
- X représente un groupe alkylène, éventuellement fluoré, comprenant de 1 à 6 atomes de carbone ; et
- R⁵ représente un atome d'hydrogène ou un groupe méthyle.

Des exemples spécifiques tombant sous le coup de ces formules peuvent être les composés spécifiques de formules (V) et (VI) suivantes : 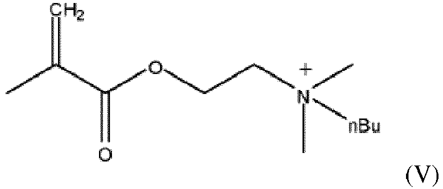 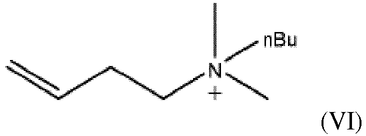 le premier composé étant le N,N,N,N-n-butyldiméthylméthacryloyloxyéthylammonium, nBu correspondant au groupe n-butyle.

Lorsque l'atome d'azote chargé appartient à un cycle hydrocarboné, le cation peut répondre à l'une des formules (VII) et (VIII) suivantes : 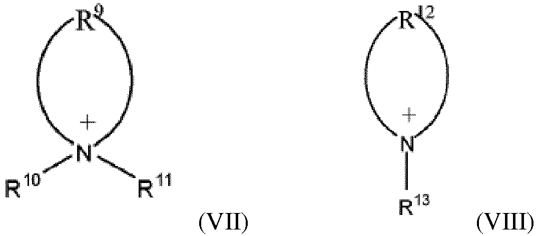 dans lesquelles :
- N⁺ et R⁹ forment ensemble un groupe alicyclique ;
- N⁺ et R¹² forment ensemble un groupe aromatique ;
- R¹⁰, R¹¹ et R¹³ représentent, indépendamment l'un de l'autre, un groupe hydrocarboné, avec l'un au moins des groupes R¹⁰, R¹¹ et R¹³ étant un groupe hydrocarboné porteur d'au moins une fonction polymérisable, telle que celle mentionnée ci-dessus.

Des exemples de cations de formule (VII) peuvent être des cations pipéridinium, des cations pyrrolidinium.

Des exemples spécifiques de cations de formule (VIII) peuvent être des cations imidazolium, des cations pyridinium.

De manière encore plus spécifique, des exemples de cations peuvent être ceux répondant aux formules (IX) et (X) suivantes : 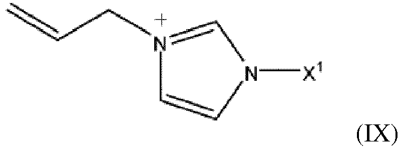 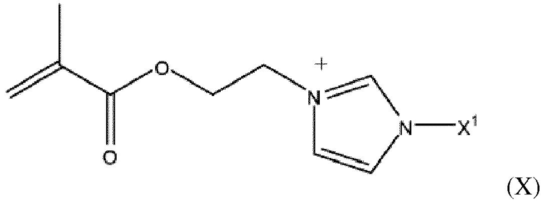 dans lesquelles X¹ représente comprenant un groupe alkyle, éventuellement fluoré, de 1 à 6 atomes de carbone.

Concernant l'anion du liquide ionique, il peut être un composé comprenant un hétéroatome porteur d'une charge négative, cet hétéroatome pouvant être choisi parmi un atome d'azote, un atome de bore, un atome de phosphore ou un atome de chlore.

Plus spécifiquement, il peut s'agir :
- d'un composé amidure, en particulier, perfluoré, tel qu'un composé *bis*(trifluorométhylsulfonyl)amidure (pouvant être également nommé « *bis*(trifluorométhanesulfonyl)imide ») de formule (XI) suivante : 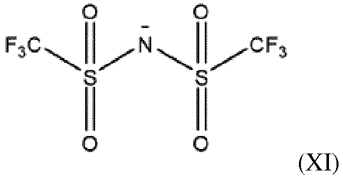
- d'un composé borate perfluoré, tel qu'un composé tétrafluoroborate de formule (XII) suivante : 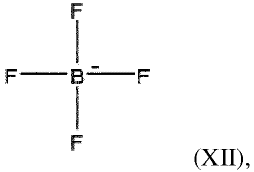
- d'un composé phosphate, tel qu'un composé de formule PF₆⁻ ; ou
- d'un composé chloré, tel qu'un composé chlorate de formule ClO₄⁻.

Un liquide ionique spécifique peut être un liquide ionique résultant de l'association :
- d'un cation ammonium aliphatique répondant à la formule générale (II) suivante : 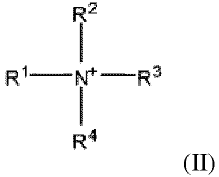 dans laquelle R¹, R², R³ et R⁴ représentent, indépendamment l'un de l'autre, un groupe hydrocarboné, avec l'un au moins des groupes R¹, R², R³ et R⁴ étant un groupe hydrocarboné porteur d'au moins une fonction polymérisable, telle que celle mentionnée ci-dessus ; et
- d'un anion amidure, de préférence, perfluoré.

Un exemple particulier de liquide ionique entrant dans cette catégorie est un liquide ionique résultant de l'association :
- d'un cation de formule (V) suivante : 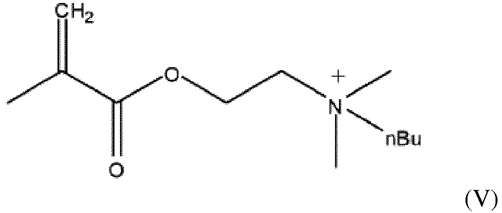 et
- d'un anion de formule (XI) suivante : 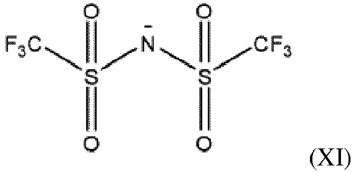 autrement dit, du N,N,N,N-n-butyldiméthylméthacryloyloxyéthylammonium *bis*(trifluorométhanesulfonyl)imide.

Ainsi, le polymère ionique issu de la polymérisation d'un tel liquide ionique peut consister en un enchaînement d'un motif répétitif de formule (XIII) suivante :

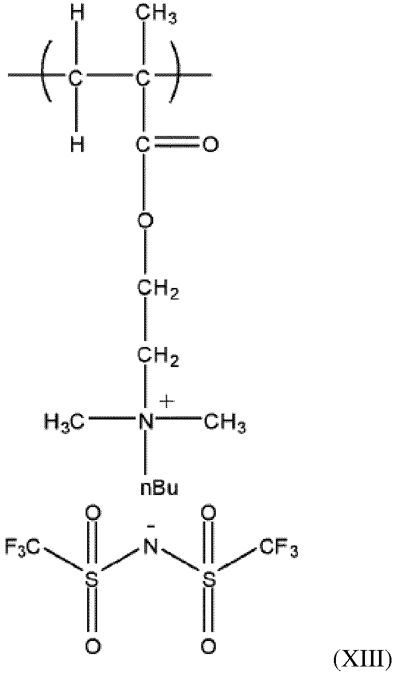

De manière plus générale, le polymère ionique issu de la polymérisation d'un liquide ionique, de formule générale simplifiée suivante : 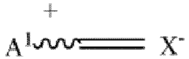 peut être représenté par la formule générale simplifiée suivante :

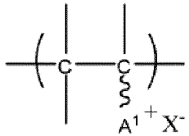

Le monomère de type liquide ionique peut éventuellement être associé à un ou plusieurs comonomères, en vue, notamment, d'améliorer la conductivité ionique, de faciliter la mise en oeuvre de la polymérisation ou les propriétés mécaniques du gel.

Des exemples de comonomères peuvent être des comonomères vinyliques, tels que des comonomères méthacrylates et des comonomères styréniques. De préférence, les fonctions polymérisables du comonomère sont de même nature que celles du cation du liquide ionique. En d'autres termes, lorsque le cation du liquide ionique comporte, par exemple, des fonctions (méth)acrylates, les fonctions polymérisables du comonomère sont également, de préférence, des fonctions (méth)acrylates.

### Formation d'un film polymérique par électro-greffage

L'électro-greffage du film polymérique à partir du monomère liquide ionique peut être plus particulièrement réalisée à partir d'un montage électrochimique classique, mettant en oeuvre l'électrode à la surface de laquelle on souhaite former le film polymérique, comme électrode de travail, et au moins une contre-électrode.

Plus particulièrement, comme représenté schématiquement en figure 2, il peut être opéré à l'aide d'un montage électrochimique (10) à trois électrodes, comprenant :
- l'électrode à fonctionnaliser (1), dite « électrode de travail », de préférence lithiée, pouvant jouer le rôle d'anode ou de cathode selon la tension appliquée ;
- une électrode de référence (3), dont le potentiel est connu et constant, permettant la mesure d'une différence de potentiel, par exemple une électrode en argent ; et
- une électrode auxiliaire (2), appelée aussi « contre-électrode », en métal inerte, par exemple en platine, qui permet de mesurer le courant circulant dans la cellule électrochimique.

La solution électrolytique (4) contient typiquement le monomère électro-actif.

La cinétique de l'électro-greffage selon l'invention peut être notamment suivie au moyen d'un potentiostat (5).

De manière avantageuse, la solution électrolytique mise en oeuvre pour l'électro-greffage selon l'invention peut être formée dudit liquide ionique, sans nécessiter la mise en oeuvre de solvant annexe. De fait, le liquide ionique sert à la fois de monomère et de solvant pour l'électro-greffage.

La solution électrolytique formée dudit liquide ionique est de préférence supplémentée avec un électrolyte support, pour faciliter le passage du courant électrique dans la solution électrolytique.

L'électrolyte support peut être choisi parmi les sels de lithium, les sels d'ammoniums quaternaires, tels que les perchlorates, les tosylates, les tétrafluoroborates, les hexafluorophosphates, les halogénures d'ammoniums quaternaires, le nitrate de sodium et le chlorure de sodium.

De préférence le sel d'électrolyte support est choisi de même nature que le sel électrolyte mis en oeuvre au niveau de la membrane électrolytique gélifiée formée à partir du polymère électro-greffé, comme détaillé dans la suite du texte. Il s'agit ainsi de préférence d'un sel de lithium, tel que décrit dans la suite du texte, comme par exemple le *bis*(trifluorométhanesulfonyl)imide de lithium (LiTFSI).

Ainsi, le procédé de fonctionnalisation d'une électrode selon l'invention comprend plus particulièrement les étapes consistant en :
(i) préparer une solution électrolytique comprenant, voire étant formée, d'un liquide ionique, le cas échéant supplémenté avec un électrolyte support, en particulier un sel de lithium ; et
(ii) électrolyser ladite solution dans une cellule d'électrolyse mettant en oeuvre ladite électrode sur laquelle doit être formé le film polymérique, comme électrode de travail, et au moins une contre-électrode, dans des conditions propices à la formation d'un film polymérique greffé de manière covalente à la surface de l'électrode.

L'électro-greffage est plus particulièrement opéré par polarisation cathodique de la surface de l'électrode à fonctionnaliser. Cette polarisation est mesurée par rapport à l'électrode de référence, par exemple une électrode d'argent.

Plus particulièrement, l'obtention du film polymère greffé par électro-greffage du liquide ionique, en particulier porteur d'une fonction vinylique activée, sur la surface conductrice de l'électrode, procède grâce à une électro-initiation de la réaction de polymérisation à partir de la surface, suivie d'une croissance des chaînes monomère par monomère.

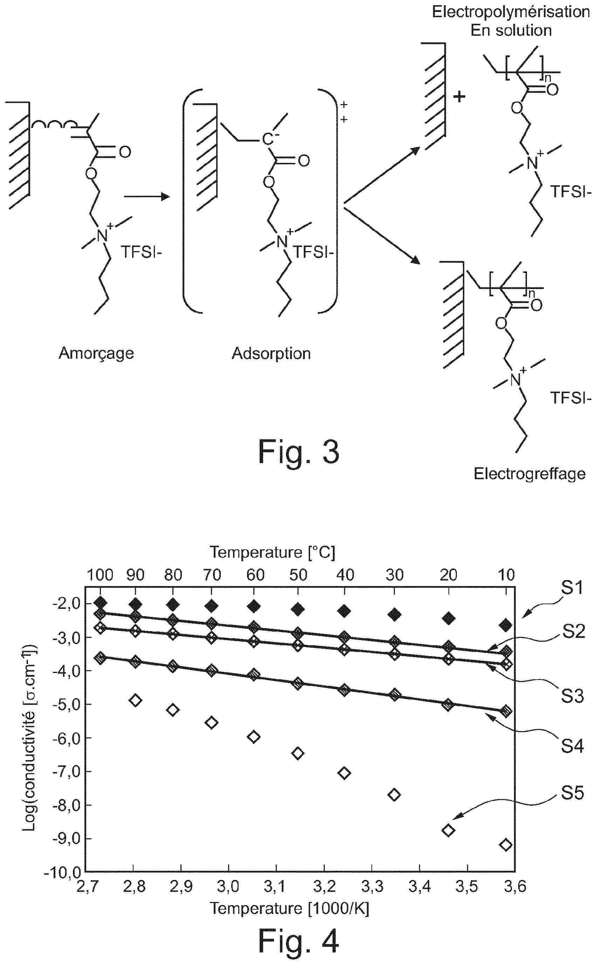

Le mécanisme réactionnel de l'électro-greffage par polarisation cathodique est par exemple représenté en figure 3, pour le monomère liquide ionique N,N,N,N-n-butyldiméthylméthacryloyloxyéthylammonium *bis*(trifluorométhanesulfonyl)imide, noté « BDMA » dans la suite du texte. Les radicaux anioniques adsorbés sur la surface de l'électrode vont servir d'initiateurs de la réaction de polymérisation ; la croissance des chaines greffées s'effectue par polymérisation anionique. Les mécanismes réactionnels mis enjeu lors de l'électro-greffage sont par exemple décrits dans le document FR 2 843 757.

L'électro-polymérisation de la solution électrolytique à base du liquide ionique peut être réalisée par polarisation en conditions de voltampérométrie linéaire ou cyclique, en conditions potentiostatiques, potentiodynamiques, intensiostatiques, galvanostatiques, galvanodynamiques ou par chronoampérométrie simple ou pulsée.

Avantageusement, elle est réalisée par polarisation en conditions de voltampérométrie cyclique.

Il appartient à l'homme du métier d'ajuster les conditions de mise en oeuvre de l'électro-polymérisation de manière à conduire à l'obtention d'un film électro-greffé souhaité.

De fait, comme représenté en figure 3, selon les paramètres d'électro-polymérisation, deux mécanismes peuvent être favorisés, d'une part l'électro-polymérisation en solution ayant lieu au voisinage de l'électrode de travail et, d'autre part, l'électro-greffage. A la différence de l'électro-polymérisation en solution, l'électro-greffage conduit à la fixation du polymère synthétisé à la surface de l'électrode *via* l'établissement d'une liaison covalente.

Plus particulièrement, comme illustré dans les exemples qui suivent, il appartient à l'homme du métier d'adapter les conditions voltammétriques, en particulier la valeur du potentiel d'arrêt du balayage, pour obtenir un film chimique greffé sur la surface de l'électrode de travail. D'une manière générale, l'électro-greffage a lieu à un potentiel, en valeur absolue, inférieur à celui auquel a lieu l'électro-polymérisation en solution.

Ainsi, l'électro-greffage est opéré selon l'invention avec un balayage de potentiel, ne dépassant pas, en valeur absolue, une valeur limite, à laquelle se produit l'électro-polymérisation en solution. Cette valeur de potentiel maximal peut être identifiée de manière empirique par l'homme du métier, comme illustré dans les exemples qui suivent.

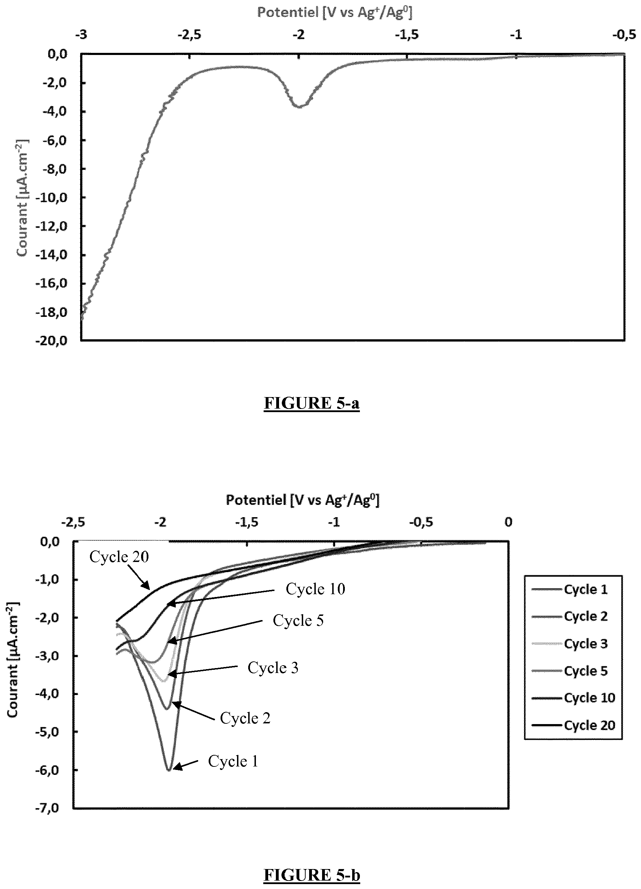

L'électro-greffage selon l'invention peut être notamment suivi au moyen d'un voltammogramme tel que représenté en figure 5.

De même, les propriétés du film électro-greffé obtenu, en particulier son épaisseur, peuvent être contrôlées en ajustant les conditions opératoires.

Il importe notamment, en vue de sa mise en oeuvre pour former la membrane électrolytique dans une batterie, que le film polymérique électro-greffé soit être suffisamment épais pour assurer une bonne isolation électrique. D'un autre côté, il est souhaitable d'obtenir un film de faible épaisseur, de manière à optimiser la conductivité ionique de la membrane électrolytique préparée à partir de ce film.

De manière avantageuse, le film polymérique électro-greffé présente une épaisseur supérieure ou égale à 10 nm, et avantageusement inférieure ou égale à 300 nm, de préférence comprise entre 50 et 100 nm.

L'épaisseur du film formé par électro-greffage en surface de l'électrode peut être plus particulièrement contrôlée *via* un ajustement des paramètres expérimentaux, accessibles de manière empirique à l'homme du métier, comme illustré dans les exemples qui suivent.

En particulier, l'épaisseur du film est dépendante du nombre de cycles de balayage dans le cas d'une voltampérométrie cyclique. Le nombre de cycles peut être compris entre 5 et 50, en particulier entre 10 et 30.

L'épaisseur du film électro-greffé peut encore être contrôlée par le temps de polarisation, ce dernier pouvant être ajusté par le biais de la vitesse de balayage en voltampérométrie.

Également, la réaction d'électro-polymérisation peut être avantageusement activée par chauffage. Ainsi, la solution électrolytique peut être portée à une température supérieure ou égale à 0 °C, en particulier comprise entre 40 et 60 °C.

Par exemple, comme illustré dans les exemples, l'électro-greffage à partir du liquide ionique N,N,N,N-n-butyldiméthylméthacryloyloxyéthylammonium *bis*(trifluorométhanesulfonyl)imide, peut être opéré en réalisant un balayage linéaire entre l'OCV ("Open Circuit Voltage" ou courant à vide) et -2,25V vs Ag⁺/Ag⁰, à une vitesse de balayage de 1 mV.s⁻¹, à une température comprise entre 20 et 60 °C et pour un nombre de cycles de balayage compris entre 10 et 30.

L'électro-greffage opéré à partir d'un monomère liquide ionique selon l'invention conduit à la formation d'un film polymérique greffé par des liaisons covalentes carbone-métal sur la surface de l'électrode et, par conséquent, présentant une très bonne adhérence à la surface de l'électrode.

Avantageusement, l'électro-greffage conduit à un film polymérique continu et d'épaisseur uniforme, couvrant toute la surface électriquement conductrice ou semi-conductrice de l'électrode, et ce quelle que soit la topographie de surface de l'électrode mise en œuvre.

### PREPARATION DE L'ENSEMBLE ELECTRODE/MEMBRANE ELECTROLYTIOUE GELIFIEE

Comme indiqué précédemment, le film polymérique électro-greffé, isolant électrique, préparé en surface d'une électrode, de préférence d'une électrode lithiée, peut avantageusement être converti en une membrane électrolytique gélifiée.

Plus particulièrement, la membrane électrolytique gélifiée peut être obtenue en procédant à la gélification du film polymérique par ajout audit film d'une solution de sel de lithium dans un agent de gélification, de préférence de type composé cristallin plastique.

### Agent de gélification

De préférence, l'agent de gélification mis en oeuvre à des fins de former un gel est plus particulièrement un composé dinitrile de formule N=C-R-C=N, dans laquelle R est un groupement hydrocarboné CₙH₂ₙ, n étant un nombre entier compris entre 1 et 6.

De tels composés dinitriles ont déjà été décrits dans le document WO 2017/032940 pour former un électrolyte gel dans une batterie au lithium. Toutefois, leur mise en oeuvre au niveau d'un polymère électro-greffé selon l'invention n'a jamais été décrite.

Les composés dinitriles sont de préférence des composés appartenant à la classe des composés cristallins plastiques.

Le composé dinitrile présente avantageusement un point de fusion supérieur à 20 °C facilitant ainsi la manipulation de l'électrolyte lors de la préparation de la batterie selon l'invention.

Le composé dinitrile joue le rôle de solvant du milieu électrolytique de la membrane électrolytique gélifiée formée selon l'invention.

De manière avantageuse, le composé dinitrile est le succinonitrile (n=2 dans la formule précité) ou le malononitrile (n=1 dans la formule précitée).

Selon un mode de réalisation particulier, le composé dinitrile est le succinonitrile.

Le succinonitrile est un composé organique cristallin hyper-plastique ininflammable et non volatile (point d'ébullition 266 °C) ayant un point de fusion de 57 °C. Sa plage d'utilisation potentielle en température est comprise entre -20°C et 250°C. A titre d'exemple, une solution à 1M de sel de LiTFSI dans le succinonitrile présente une conductivité ionique de l'ordre de 3.10⁻³ S.cm⁻¹ à 20°C.

De manière générale, le composé dinitrile permet de solubiliser le sel de lithium de l'électrolyte. En outre, sa combinaison avec le polymère électro-greffé permet d'obtenir un gel.

Il est entendu que le composé dinitrile est mis en oeuvre en une teneur suffisante pour permettre la gélification du polymère électro-greffé.

En particulier, le composé dinitrile peut être présent dans un ratio massique composé dinitrile/polymère compris entre 10/90 et 90/10, en particulier entre 25/75 et 75/25 et plus particulièrement de l'ordre de 50/50.

D'autres solvants pour la gélification dudit polymère électro-greffé peuvent encore être mis en oeuvre, et en particulier de type carbonates. Ils peuvent être par exemple choisis parmi les carbonates d'alkyles, cycliques ou linéaires, classiquement utilisés pour la préparation d'électrolyte, pris seuls ou en mélange, et notamment choisis parmi le carbonate de diméthyle (DMC), le carbonate de diéthyle (DEC), le carbonate de propylène (PC), le carbonate de vinylène (VC), le carbonate de vinyléthylène (VEC), le carbonate d'éthylène (EC), le carbonate d'éthyle méthyle (EMC), etc.

De préférence, le solvant de gélification est un composé dinitrile tel que décrit précédemment.

### Sel de lithium

Le sel de lithium mis en oeuvre selon l'invention peut être choisi, d'une manière classique, parmi le LiTFSI (le *bis*(trifluorométhanesulfonyl)imide de lithium), le LiBOB (le *bis*(oxalato)borate de lithium), LiPF₆, LiClO₄, LiBF₄, LiAsF₆, LiCF₃SO₃, LiN(CF₃SO₂)₃, LiN(C₂F₅SO₂) (LiBETI), et leurs mélanges.

Selon un mode de réalisation particulier, le sel de lithium est le LiTFSI.

Au niveau de l'électrolyte gélifié, la concentration en sel(s) de lithium dans le composé dinitrile peut être plus particulièrement comprise entre 0,5 et 3 mol.L⁻¹, en particulier de l'ordre de 1 mol.L⁻¹.

De préférence, le rapport massique [polymère]/[composé dinitrile + sel de lithium] est avantageusement compris entre 10/90 et 90/10, de préférence entre 25/75 et 75/25 et plus particulièrement entre 40/60 et 60/40.

Ce rapport permet d'atteindre de bonnes propriétés, d'une part en termes de conductivité ionique apportée par le mélange composé dinitrile + sel de lithium, en particulier proches de celles apportées par un électrolyte liquide conventionnel et, d'autre part, en termes de tenue mécanique et d'isolation apportée par le polymère électro-greffé.

La membrane électrolytique gélifiée obtenue selon l'invention assure ainsi à la fois sa fonction électrolytique au sein d'une batterie au lithium, et en outre présente de bonnes propriétés d'isolation électronique et de tenue mécanique.

En outre, la membrane électrolytique gélifiée présente une très bonne adhérence à l'électrode, du fait de la matrice polymérique électro-greffée à la surface de l'électrode.

De manière avantageuse, du fait de l'épaisseur optimisée du film électro-greffé à la surface de l'électrode, la membrane électrolytique gélifiée peut présenter une épaisseur optimale, en particulier une faible épaisseur.

L'épaisseur de la membrane électrolytique gélifiée peut être ainsi inférieure ou égale à 10 nm, en particulier comprise entre 10 nm et 500 nm et plus particulièrement comprise entre 50 nm et 200 nm.

### BATTERIE

L'ensemble électrode/membrane électrolytique gélifiée obtenu selon l'invention peut être avantageusement mis en oeuvre au niveau d'un batterie au lithium.

Il peut être notamment mis en oeuvre au niveau d'une batterie lithium-ion ou lithium-métal, de préférence lithium-ion.

En particulier, l'ensemble électrode/membrane électrolytique obtenu selon l'invention est assemblé avec les autres constituants classiques de la batterie (deuxième électrode, collecteurs de courant).

De préférence, l'électrode, de préférence lithiée, présentant en surface la membrane électrolytique gélifiée, est mise en oeuvre pour former l'électrode positive (ou cathode) dans une batterie au lithium.

Ainsi, une batterie au lithium selon l'invention peut comprendre :
- un ensemble selon l'invention formé d'une électrode lithiée supportant une membrane électrolytique gélifiée selon l'invention ; et
- une électrode négative au contact de la face de la membrane électrolytique gélifiée opposée à l'électrode positive.

L'électrode négative peut être choisie parmi toute électrode connue dans le domaine des batteries au lithium. Le matériau actif de l'électrode négative peut être par exemple choisi parmi le titanate de type Li₄Ti₅O₁₂ (LTO), le carbone graphite, le soufre, le lithium métal, le silicium. Il peut s'agir notamment d'une électrode à base de lithium métallique.

De même que pour l'électrode positive, le matériau actif d'électrode négative peut représenter de 50 à 95 %, en particulier de 70 à 80 %, par rapport à la masse de l'électrode.

Les électrodes peuvent être associées, de manière classique à un collecteur de courant. Il peut s'agir d'un non-tissé en carbone.

L'invention concerne encore, selon un autre de ses aspects, un procédé de préparation d'une batterie au lithium par assemblage de l'ensemble électrode/membrane électrolytique gélifiée obtenu selon l'invention avec une électrode négative.

De manière avantageuse, l'électrolyte étant sous la forme de gel, la batterie selon l'invention ne nécessite pas de séparateur conventionnel. La membrane électrolytique gélifiée obtenue selon l'invention permet à la fois d'assurer le déplacement des ions lithium et la fonction de séparateur d'électrodes.

Ainsi, l'électrolytique gélifié d'une batterie selon l'invention ne comprend pas de polymères autres que le polymère électro-greffé issu de l'électro-polymérisation du liquide ionique, tel que décrit précédemment.

L'invention va maintenant être décrite au moyen des exemples suivants, donnés bien entendu à titre illustratif et non limitatif de l'invention.

### EXEMPLE 1

### Propriétés électrochimiques du polymère gélifié

Les propriétés de conduction ionique d'un électrolyte de nature polymère gélifié selon l'invention ont été étudiées.

Le polymère a été synthétisé de manière classique *via* une polymérisation radicalaire du monomère N,N,N,N-n-butyldiméthylméthacryloyloxyéthylammonium *bis*(trifluorométhanesulfonyl)imide, noté par la suite BDMA. Dans un ballon, 10 g de monomère BDMA et 4 g d'AIBN (azobisisobutyronitrile) ont été dissous dans 10 ml de THF (tétrahydrofurane). Le tout a été chauffé à 60°C sous reflux pendant 24 heures. Ensuite, le polymère a été purifié par précipitation dans le diéthyl éther. Il a ensuite été séché pendant 48 heures sous vide à 80 °C puis stocké en boite à gants en atmosphère inerte.

Le polymère ainsi obtenu, le succinonitrile (SN) et le LiTFSI (sel *bis*(trifluorométhanesulfonyl)imide de lithium, teneur 1M par rapport à la masse SN+ BDMA) sont ensuite dissous dans du THF. Différentes solutions sont préparées avec des teneurs en polymère variables par rapport au poids total du mélange polymère par rapport au succinonitrile : 0 % pds, 60 % pds, 70 % pds, 80 % pds et 100 % pds.

Les différentes solutions préparées sont résumées dans le tableau 1 dessous, les quantités étant en grammes.

**Tableau 1**

| **Solutions testés** ^{(∗)} | **m (BDMA)** | **m (LiTFSI)** | **m (SN)** |
|---|---|---|---|
| S1 (0 %pds BDMA) | 0 | 0,43 | 2 |
| S2 (60 %pds BDMA) | 0,5 | 0,19 | 0,38 |
| S3 (70 %pds BDMA) | 0,5 | 0,16 | 0,25 |
| S4 (80 %pds BDMA) | 0,5 | 0,14 | 0,13 |
| S5 (100 %pds BDMA) | 0,5 | 0,11 | 0 |

### ^{(∗}⁾ pourcentage donné en BDMA par rapport à la masse BDMA + SN.

Les solutions sont ensuite enduites sur des films de polyéthylène et séchées dans une étuve à 50°C.

### Evaluation des conductivités ioniques

Les différents électrolytes sont ensuite montés en pile bouton, pour réaliser des mesures d'impédance et obtenir leurs conductivités ioniques en fonction de la température.

Pour ce faire, les électrolytes sont placés dans un espaceur en polyéthylène, entre deux cales en inox. Un ressort est ajouté sur l'un des capots pour assurer un contact optimal entre le polymère et les cales.

Les mesures d'impédance sont réalisées à des fréquences comprises entre 1 MHz et 10 MHz, à un balayage en tension de 10 mV.

Les résultats en termes de conductivité ionique en fonction de la température sont représentés en figure 4.

L'électrolyte polymère non gélifié (S5) a un comportement, dit de Vogel-Tamman-Fulcher (VTF), c'est-à-dire non linéaire. L'évolution de la conductivité avec la température dépend aussi des changements mécaniques que subit le polymère avec la température, comme les transitions vitreuses.

Lorsque l'électrolyte polymère est gélifié (cas de S1, S2, S3 et S4), la conductivité du gel d'électrolyte polymère suit une loi dite d'Arrhenius avec la température. Le transport ionique a donc lieu dans la phase liquide de l'électrolyte, formée du sel de lithium dans le composé dinitrile.

A partir de 50% pds de phase liquide (cas de S3), on obtient des conductivités ioniques proches de celle des électrolytes liquides à température ambiante.

### EXEMPLE 2

### Identification du potentiel d'électro-greffage

L'électro-greffage du polymère à partir du liquide ionique BDMA a été testé au niveau d'une électrode en carbone vitreux. Cet essai montre la possibilité d'électro-greffer un tel polymère et de déterminer la fenêtre de potentiel dans laquelle le mécanisme d'électro-greffage a lieu.

Pour cela, un montage (10) à trois électrodes est utilisé, comme représenté schématiquement en figure 2. L'électrode de travail (1) est une électrode en carbone vitreux de 3 mm de diamètre. La contre-électrode (2) est un fil de platine. L'électrode de référence (3) est une solution contenant 0,1 M de TEABF₄ (N,N,N-triéthyléthanaminium tétrafluoroborate) et 0,01M de AgNO₃ dans l'acétonitrile, dans laquelle est plongé un fil d'argent.

Ces électrodes sont placées dans une solution électrolytique formée de 3 g de monomère liquide ionique BDMA et 0,1 g de LiTFSI.

Ce montage est relié à un potentiostat (5) afin de réaliser des voltampérométries cycliques. Un balayage de potentiel entre l'OCV ("Open Circuit Voltage" ou courant à vide) et -3V vs Ag⁺/Ag⁰ est appliqué à une vitesse de 0,1 mV.s⁻¹.

La réponse en intensité de courant est enregistrée, et représentée en figure 5-a.

Le pic observé à -2 V vs Ag⁺/Ag⁰ correspond à l'électro-greffage. Ensuite, après -2,5 V vs Ag⁺/Ag⁰ a lieu l'électro-polymérisation en solution.

Une seconde expérience d'électro-greffage a été réalisée à température ambiante, en prenant une nouvelle solution électrolytique identique à celle mise en oeuvre précédemment, et une électrode en carbone vitreux propre.

Le potentiel a été coupé à -2,25 V vs Ag⁺/Ag⁰ avec une vitesse de balayage de 1 mV.s⁻¹.

Les courbes de voltammétrie cyclique obtenues sont représentées en figure 5-b.

On observe une diminution du pic d'électro-greffage avec le nombre de cycles réalisés, ce qui démontre une isolation de la surface de l'électrode en carbone.

### EXEMPLE 3

### Electro-greffage en surface d'une électrode lithiée

Un montage à trois électrodes, similaire à celui mis en oeuvre en exemple 2, a été utilisé, excepté le fait que l'électrode de travail en carbone vitreux est remplacée par une électrode de nickel sur laquelle est déposée une couche d'épaisseur 15 µm de LiNiO₂ à la surface.

Un balayage de potentiel entre l'OCV et -2,25 vs Ag⁺/Ag⁰ est appliqué avec une vitesse de balayage de 1 mV.s⁻¹.

L'électro-greffage est réalisée à différentes températures (25°C, 40°C et 60°C). La courbe « avant Ep » correspond à la courbe obtenue avant électro-greffage.

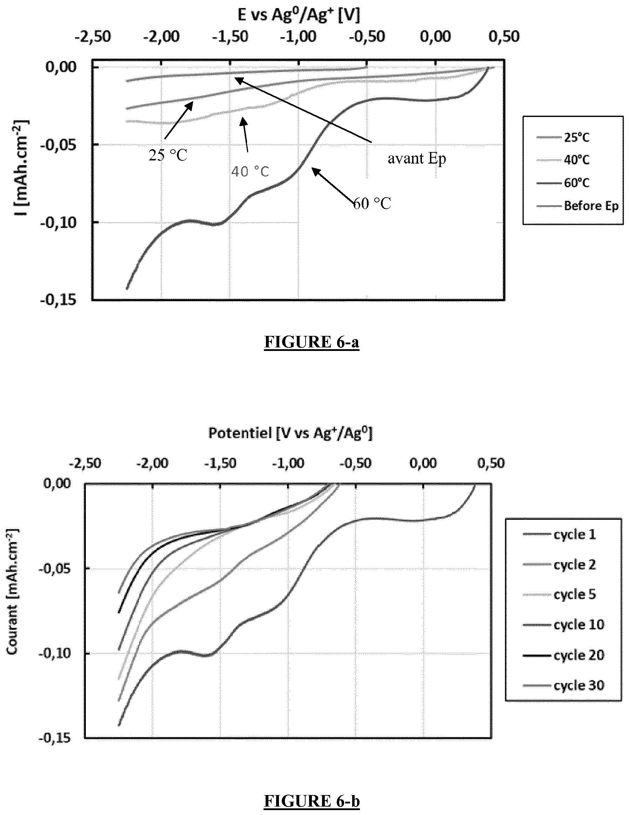

Les courbes de voltammétrie cyclique obtenues pour le premier cycle de balayage, aux différentes températures, sont représentées en figure 6-a.

Il est plus difficile d'identifier le pic d'électro-greffage. Toutefois, il est clairement visible que la réaction d'électro-greffage (au potentiel -1,6 V vs Ag⁺/Ag⁰) est plus importante à 60 °C.

Les courbes de voltammétrie cyclique en fonction des cycles réalisés à une température de 60 °C sont représentées en figure 6-b.

Ce voltampérogramme montre une diminution de l'intensité du courant au cours des cycles, montrant ainsi que l'électrode de travail est de plus en plus isolante.

### EXEMPLE 4

### Essais d'isolation

En plus du suivi voltampérométrique, une expérience a été réalisée afin de démontrer l'isolation de la surface de l'électrode sur laquelle a été électro-greffé le polymère selon l'invention.

Pour cela, un montage identique à celui mis en oeuvre en exemple 3 est utilisé, avec trois électrodes, l'électrode de travail étant l'électrode de Ni/LiNiO₂, sur laquelle l'électro-greffage a été réalisé. La contre-électrode est en platine, et l'électrode de référence une solution de AgNO₃ avec un fil d'argent comme décrit en exemple 3.

La solution électrolytique est un milieu non-solvant du polymère électro-greffé (mélange de chloroforme et de méthoxyperfluorobutane (1 :1 %V)) dans laquelle est dissout un sel de fond (0,1M de TEABF₄) et une sonde RedOx (0,005M de 2-3-dichloro-5,6-dicyano-p-benzoquinone, notée DDB).

Cette sonde RedOx est une molécule réagissant de manière réversible lorsqu'on applique un balayage de potentiel. Ainsi, dans le cas où l'électrode n'est pas isolée, la réponse RedOx de la molécule sera visible. Au contraire, si l'électrode est isolée, la sonde RedOx ne peut pas réagir.

L'efficacité d'isolation, par l'électro-greffage du polymère selon l'invention, opéré aux différentes températures (25°C, 40°C et 60°C) est ainsi vérifiée.

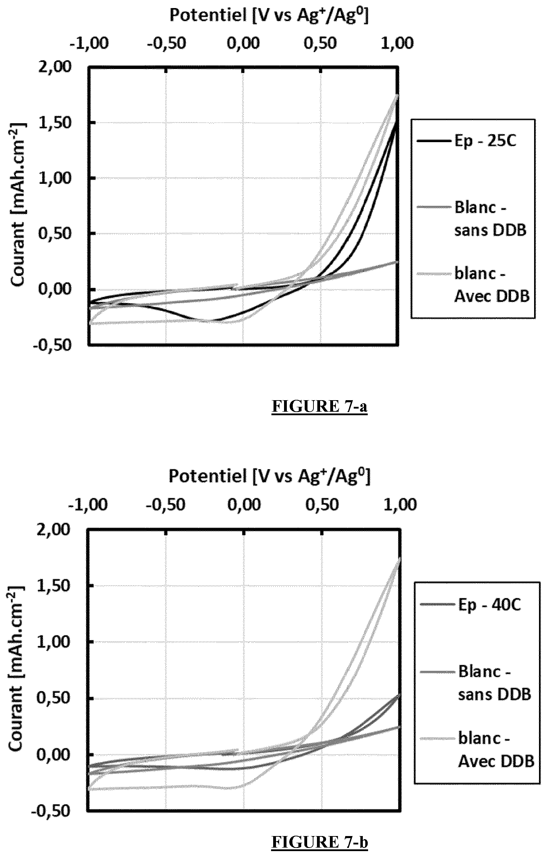

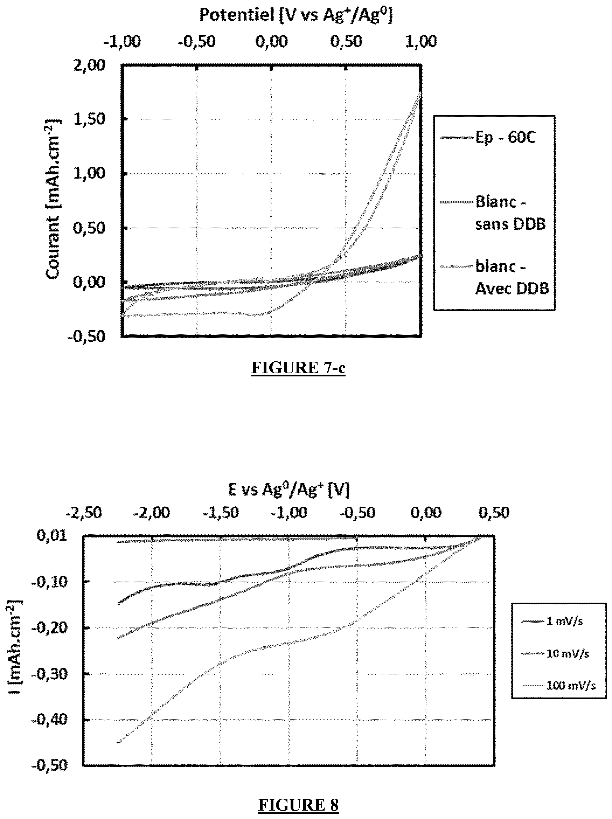

Sont représentés en figures 7-a, 7-b et 7-c les voltampérogrammes obtenus pour l'électrode de nickel/LiNiO₂ nue dans la solution électrolyte ne contenant pas de sonde RedOx ("Blanc sans DDB"), pour l'électrode de nickel/LiNiO₂ nue après ajout de la sonde ("Blanc avec DDB ") et pour l'électrode de nickel/LiNO₂ fonctionnalisée par électro-greffage du polymère, obtenue à l'issue de 30 cycles, à différentes températures, comme décrit en exemple 3, après ajout de la sonde RedOx ("DDB").

Il ressort des voltampérogrammes obtenus, que pour un électro-greffage réalisé à 25°C, la réponse de la sonde RedOx est quasiment inchangée. L'épaisseur du polymère électro-greffé à la surface de l'électrode lithiée n'est pas suffisante pour isoler la surface de l'électrode.

Pour un électro-greffage à 40 °C, on constate une nette diminution de l'intensité de courant. L'épaisseur du polymère électro-greffé est plus importante mais reste insuffisante pour isoler totalement la surface.

Pour un électro-greffage à 60 °C, la sonde Redox ne réagit plus. L'électrode lithiée est totalement isolée.

### EXEMPLE 5

### Etude de la vitesse de balayage sur l'électro-greffage

Le même montage que celui décrit en exemple 3 est mis en oeuvre. L'électro-greffage est réalisé à 60 °C avec des vitesses de balayage variant de 1 à 100 mV/s.

Les courbes de voltammétrie cyclique obtenues sont représentées en figure 8.

Plus la vitesse de balayage est rapide, plus les intensités de courant sont élevées. Cependant, pour des vitesses de balayage de 10 et 100 mV.s⁻¹, les pics d'électro-greffage sont observés.

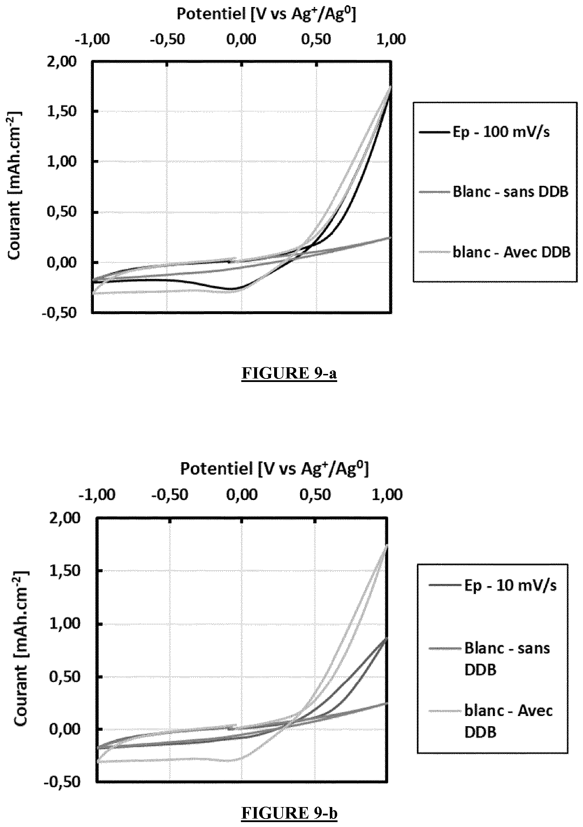

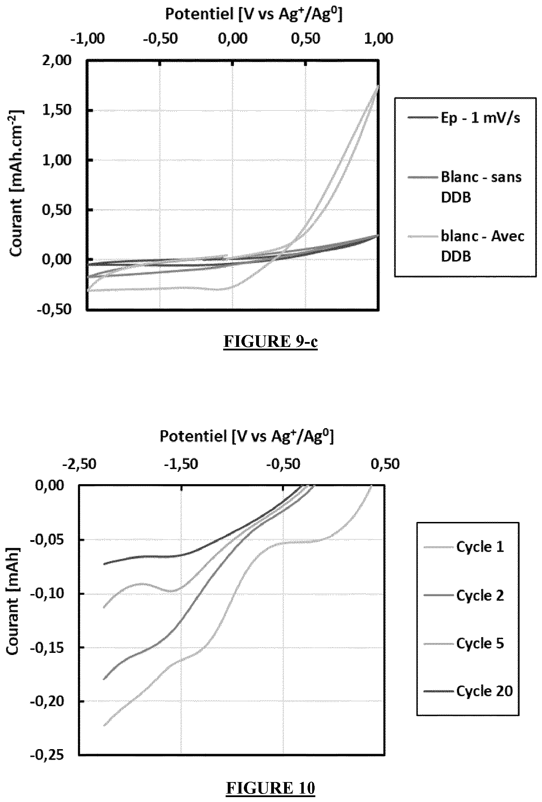

Les mêmes essais d'isolation de l'électrode que ceux effectués en exemple 4 avec une sonde RedOx ont été réalisés. Les voltampérogrammes obtenus sont représentés en figures 9-a, 9-b et 9-c pour des électro-greffages réalisés à 100, 10 et 1 mV/s.

Le même type de constatation peut être fait. Pour un électro-greffage opéré à une vitesse de 1 mV/s, l'électrode est bien isolée. Plus la vitesse de balayage pour l'électro-greffage est élevée, plus le film formé est fin, et moins l'électrode est isolée.

### EXEMPLE 6

### Synthèse sur une structure poreuse

Un essai d'électro-greffage du polymère est opéré sur une électrode 3D.

Un montage à trois électrodes similaires à celui décrit en exemple 3 a été utilisé, excepté le fait que l'électrode de travail est remplacée par une mousse de nickel à la surface de laquelle est déposée un film de 15 µm d'épaisseur de LiNiO₂.

L'électro-greffage est réalisé à 1 mV.s⁻¹ à 40 °C.

Le voltampérogramme obtenu est représenté en figure 10.

On observe bien le pic d'électro-greffage à -1,5 V vs Ag⁺_{/}Ag⁰.

De plus, l'intensité de courant diminue au fur et à mesure des cycles, ce qui montre une isolation de la surface.

Cet essai montre bien la possibilité d'opérer l'électro-greffage selon l'invention sur une surface poreuse.

## Revendications

1. Procédé de fonctionnalisation de la surface électriquement conductrice ou semi-conductrice d'une électrode, par électro-greffage d'un film polymérique obtenu à partir d'un monomère liquide ionique dont le cation est porteur d'au moins une fonction électro-polymérisable.

2. Procédé selon la revendication précédente, dans lequel ladite électrode est destinée à une batterie au lithium, en particulier ladite électrode est une électrode lithiée, et plus particulièrement présente en surface un film d'oxyde lithié de métal de transition, notamment un film d'oxyde de nickel lithié (LiNiO₂).

3. Procédé selon l'une quelconque des revendications précédentes, dans lequel l'électro-greffage est opéré à partir d'une solution électrolytique formée dudit liquide ionique, le cas échéant supplémentée avec un électrolyte support, notamment un sel de lithium tel que le *bis*(trifluorométhanesulfonyl)imide de lithium.

4. Procédé selon l'une quelconque des revendications précédentes, dans lequel la fonction électro-polymérisable est une fonction vinylique activée, en particulier une fonction méthacrylate.

5. Procédé selon l'une quelconque des revendications précédentes, dans lequel le cation dudit liquide ionique est un cation ammonium aliphatique répondant à la formule générale (II) : 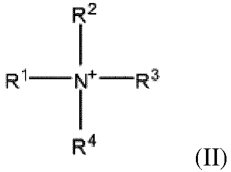 dans laquelle R¹, R², R³ et R⁴ représentent, indépendamment l'un de l'autre, un groupe hydrocarboné, avec l'un au moins des groupes R¹, R², R³ et R⁴ étant un groupe hydrocarboné porteur d'au moins une fonction électro-polymérisable, et en particulier ledit cation est de formule (V) suivante : 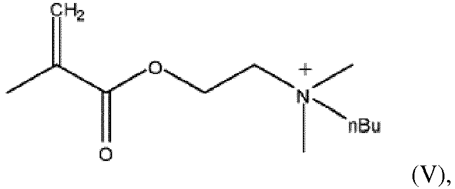 avec nBu correspondant au n-butyle.
et/ou l'anion dudit liquide ionique est un composé comprenant un hétéroatome porteur d'une charge négative, cet hétéroatome étant choisi parmi un atome d'azote, un atome de bore, un atome de phosphore ou un atome de chlore, ledit anion étant en particulier un composé amidure, et plus particulièrement le composé *bis*(trifluorométhylsulfonyl)amidure de formule (XI) suivante :

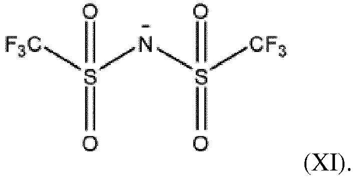

6. Procédé selon l'une quelconque des revendications précédentes, dans lequel le liquide ionique est le N,N,N,N-n-butyldiméthylméthacryloyloxyéthylammonium *bis*(trifluorométhanesulfonyl)imide.

7. Procédé selon l'une quelconque des revendications précédentes, dans lequel l'électro-greffage est réalisé par polarisation en conditions de voltampérométrie cyclique, en ajustant les conditions opératoires, notamment en termes de valeur du potentiel maximum imposé, de vitesse de balayage, de nombre de cycles de balayage et/ou de température du milieu d'électrolyse, pour contrôler les propriétés du film polymérique formé, en particulier son épaisseur.

8. Procédé selon l'une quelconque des revendications précédentes, comprenant au moins les étapes consistant en :
(i) préparer une solution électrolytique comprenant, voire étant formée, d'un liquide ionique, le cas échéant supplémenté avec un électrolyte support, en particulier un sel de lithium ;
(ii) électrolyser ladite solution dans une cellule d'électrolyse mettant en oeuvre ladite électrode sur laquelle doit être formé le film polymérique, comme électrode de travail, et au moins une contre-électrode, dans des conditions propices à la formation d'un film polymérique greffé de manière covalente à la surface de l'électrode.

9. Structure comprenant une électrode présentant une surface électriquement conductrice ou semi-conductrice, sur laquelle est greffé de manière covalente un film polymérique, obtenu par électro-polymérisation à partir d'un monomère liquide ionique dont le cation est porteur d'au moins une fonction électro-polymérisable.

10. Structure selon la revendication précédente, **caractérisée en ce que** ladite électrode est destinée à une batterie au lithium, en particulier ladite électrode est une électrode lithiée, et plus particulièrement présente en surface un film d'oxyde lithié de métal de transition, notamment un film d'oxyde de nickel lithié.

11. Structure selon la revendication 9 ou 10, **caractérisée en ce que** le film polymérique électro-greffé présente une épaisseur supérieure ou égale à 10 nm, et avantageusement inférieure ou égale à 300 nm, de préférence comprise entre 50 et 100 nm.

12. Structure selon l'une quelconque des revendications 9 à 11, ledit film polymérique étant obtenu dans les conditions d'électro-greffage définies selon l'une quelconque des revendications 3 à 8.

13. Procédé de préparation d'une membrane électrolytique gélifiée en surface d'une électrode, de préférence d'une électrode lithiée, comprenant au moins les étapes suivantes :
(a) disposer d'une électrode, de préférence d'une électrode lithiée, sur laquelle est greffé de manière covalente un film polymérique isolant électrique, obtenu par électro-polymérisation à partir d'un monomère liquide ionique dont le cation est porteur d'au moins une fonction électro-polymérisable, ledit film polymérique étant en particulier obtenu dans les conditions d'électro-greffage définies selon l'une quelconque des revendications 3 à 8 ;
(b) gélifier le film polymérique par ajout d'une solution de sel de lithium dans un composé dinitrile de formule N=C-R-C=N, dans laquelle R est un groupement hydrocarboné CₙH₂ₙ, n étant un nombre entier compris entre 1 et 6, en particulier dans le succinonitrile ou le malononitrile, en particulier le succinonitrile ; ou dans un ou plusieurs solvants tels que des carbonates.

14. Procédé selon la revendication 13, dans lequel le rapport massique [polymère]/[composé dinitrile + sel de lithium] est compris entre 10/90 et 90/10, de préférence entre 25/75 et 75/25 et plus particulièrement entre 40/60 et 60/40.

15. Procédé selon l'une quelconque des revendications 13 et 14, dans lequel le sel de lithium est choisi parmi le *bis*(trifluorométhanesulfonyl)imide de lithium, le bis(oxalato)borate de lithium, LiPF₆, LiClO₄, LiBF₄, LiAsF₆, LiCF₃SO₃, LiN(CF₃SO₂)₃, LiN(C₂F₅SO₂) et leurs mélanges.

16. Procédé selon l'une quelconque des revendications 13 à 15, dans lequel le sel de lithium présente une concentration comprise entre 0,5 et 3 mol.L⁻¹ dans le composé dinitrile.

17. Ensemble électrode/membrane électrolytique, comprenant une électrode, de préférence une électrode lithiée, supportant une membrane électrolytique gélifiée obtenue à l'issue du procédé tel que défini selon l'une quelconque des revendications 13 à 16.

18. Utilisation d'un ensemble électrode/membrane électrolytique tel que défini en revendication 17 dans une batterie au lithium, en particulier dans une batterie lithium-ion.

19. Batterie au lithium, comprenant un ensemble électrode/membrane électrolytique tel que défini selon la revendication 17.

20. Batterie selon la revendication précédente, comprenant :
- un ensemble électrode/membrane électrolytique tel que défini en revendication 17, dans lequel l'électrode est une électrode lithiée, en particulier présentant en surface un film d'oxyde lithié de métal de transition, notamment un film d'oxyde de nickel lithié ; et
- une électrode négative au contact de la face de la membrane électrolytique gélifiée opposée à l'électrode positive.

## Patentansprüche

1. Verfahren zur Funktionalisierung der elektrisch leitenden oder Halbleiter-Oberfläche einer Elektrode durch Elektropfropfen eines Polymerfilms, der ausgehend von einem flüssigen ionischen Monomer erhalten wird, dessen Kation mindestens eine elektropolymerisierbare Funktion trägt.

2. Verfahren nach dem vorhergehenden Anspruch, wobei die Elektrode für eine Lithium-Batterie bestimmt ist, wobei insbesondere die Elektrode eine lithiierte Elektrode ist und genauer gesagt auf der Oberfläche einen Lithiumübergangsmetalloxid-Film, insbesondere einen Film aus Lithiumnickeloxid (LiNiO₂) aufweist.

3. Verfahren nach einem der vorhergehenden Ansprüche, wobei die Elektropfropfung ausgehend von einer Elektrolytlösung durchgeführt wird, die von der ionischen Flüssigkeit gebildet wird, die gegebenenfalls mit einem Trägerelektrolyten, insbesondere einem Lithiumsalz, wie Lithiumbis(trifluormethansulfonyl)imid, angereichert ist.

4. Verfahren nach einem der vorhergehenden Ansprüche, wobei die elektropolymerisierbare Funktion eine aktivierte Vinylfunktion, insbesondere eine Methacrylatfunktion, ist.

5. Verfahren nach einem der vorhergehenden Ansprüche, wobei das Kation der ionischen Flüssigkeit ein aliphatisches Ammoniumkation der allgemeinen Formel (II) ist: 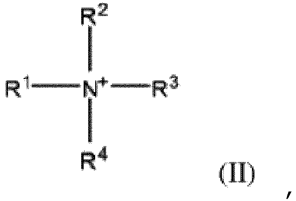 worin R¹, R², R³ und R⁴ unabhängig voneinander eine Kohlenwasserstoffgruppe darstellen, wobei mindestens eine der Gruppen R¹, R², R³ und R⁴ eine Kohlenwasserstoffgruppe ist, die mindestens eine elektropolymerisierbare Funktion trägt, und insbesondere das Kation die folgende Formel (V) hat: 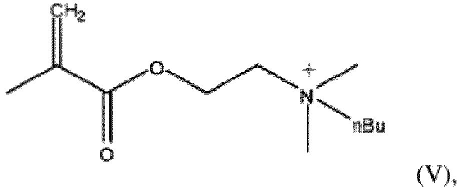 wobei nBu n-Butyl entspricht,
und/oder das Anion der ionischen Flüssigkeit eine Verbindung ist, die ein Heteroatom enthält, das eine negative Ladung trägt, wobei dieses Heteroatom aus einem Stickstoffatom, einem Boratom, einem Phosphoratom oder einem Chloratom ausgewählt ist, wobei das Anion insbesondere eine Amidverbindung und genauer gesagt die Bis(trifluormethansulfonyl)amid-Verbindung der folgenden Formel (XI) ist:

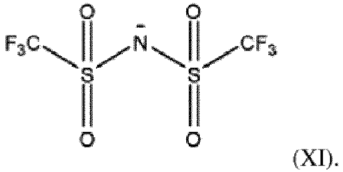

6. Verfahren nach einem der vorhergehenden Ansprüche, wobei die ionische Flüssigkeit N,N,N,N-n-Butyldimethylmethacryloyloxyethylammoniumbis(trifluorme thansulfonyl)imid ist.

7. Verfahren nach einem der vorhergehenden Ansprüche, wobei die Elektropfropfung durch Polarisation unter Zyklovoltammetriebedingungen durchgeführt wird, wobei die Durchführungsbedingungen insbesondere im Hinblick auf den Wert des angelegten Maximalpotenzials, die Abtastgeschwindigkeit, die Anzahl der Abtastzyklen und/oder die Temperatur des Elektrolysemediums eingestellt werden, um die Eigenschaften des gebildeten Polymerfilms, insbesondere dessen Dicke, zu steuern.

8. Verfahren nach einem der vorhergehenden Ansprüche, das mindestens die folgenden Schritte umfasst:
(i) Herstellen einer Elektrolytlösung, die eine ionische Flüssigkeit, die gegebenenfalls mit einem Trägerelektrolyten, insbesondere einem Lithiumsalz, angereichert ist, umfasst oder sogar daraus besteht;
(ii) Elektrolysieren der Lösung in einer Elektrolysezelle unter Verwendung der Elektrode, auf der der Polymerfilm gebildet werden soll, als Arbeitselektrode und mindestens einer Gegenelektrode unter Bedingungen, die der Bildung eines kovalent auf die Oberfläche der Elektrode gepfropften Polymerfilms förderlich sind.

9. Struktur, umfassend eine Elektrode mit einer elektrisch leitenden oder Halbleiter-Oberfläche, auf die kovalent ein Polymerfilm gepfropft ist, der durch Elektropolymerisation ausgehend von einem flüssigen ionischen Monomer erhalten wird, dessen Kation mindestens eine elektropolymerisierbare Funktion trägt.

10. Struktur nach dem vorhergehenden Anspruch, **dadurch gekennzeichnet, dass** die Elektrode für eine Lithium-Batterie bestimmt ist, wobei insbesondere die Elektrode eine lithiierte Elektrode ist und genauer gesagt auf der Oberfläche einen Lithiumübergangsmetalloxid-Film, insbesondere einen Lithiumnickeloxid-Film, aufweist.

11. Struktur nach Anspruch 9 oder 10, **dadurch gekennzeichnet, dass** der elektrogepfropfte Polymerfilm eine Dicke von mehr als oder gleich 10 nm und vorteilhafterweise weniger als oder gleich 300 nm, vorzugsweise zwischen 50 und 100 nm, aufweist.

12. Struktur nach einem der Ansprüche 9 bis 11, wobei der Polymerfilm unter den Elektropfropfungsbedingungen nach einem der Ansprüche 3 bis 8 erhalten wird.

13. Verfahren zur Herstellung einer gelierten Elektrolytmembran auf der Oberfläche einer Elektrode, vorzugsweise einer lithiierten Elektrode, das mindestens die folgenden Schritte umfasst:
(a) Bereitstellen einer Elektrode, vorzugsweise einer lithiierten Elektrode, auf die kovalent ein elektrisch isolierender Polymerfilm gepfropft wird, der durch Elektropolymerisation ausgehend von einem flüssigen ionischen Monomer erhalten wird, dessen Kation mindestens eine elektropolymerisierbare Funktion trägt, wobei der Polymerfilm insbesondere unter den Elektropfropfungsbedingungen nach einem der Ansprüche 3 bis 8 erhalten wird;
(b) Gelieren des Polymerfilms durch Zugabe einer Lithiumsalz-Lösung in einer Dinitrilverbindung der Formel N≡C-R-C≡N, wobei R eine Kohlenwasserstoffgruppierung CₙH₂ₙ ist, wobei n eine ganze Zahl zwischen 1 und 6 ist, insbesondere in Succinonitril oder Malonitril, insbesondere Succinonitril, oder in einem oder mehreren Lösungsmitteln, wie Carbonaten.

14. Verfahren nach Anspruch 13, wobei das Massenverhältnis [Polymer]/[Dinitrilverbindung + Lithiumsalz] zwischen 10/90 und 90/10, vorzugsweise zwischen 25/75 und 75/25 und ganz besonders zwischen 40/60 und 60/40 beträgt.

15. Verfahren nach einem der Ansprüche 13 und 14, wobei das Lithiumsalz aus Lithiumbis(trifluormethansulfonyl)imid, Lithiumbis(oxalato)borat, LiPF₆, LiClO₄, LiBF₄, LiAsF₆, LiCF₃SO₃, LiN(CF₃SO₂)₃, LiN(C₂F₅SO₂) und ihren Gemischen ausgewählt ist.

16. Verfahren nach einem der Ansprüche 13 bis 15, wobei das Lithiumsalz eine Konzentration zwischen 0,5 und 3 mol.l⁻¹ in der Dinitrilverbindung aufweist.

17. Elektrode/Elektrolytmembran-Anordnung, umfassend eine Elektrode, vorzugsweise eine lithiierte Elektrode, die Träger einer gelierten Elektrolytmembran ist, die nach Abschluss des Verfahrens nach einem der Ansprüche 13 bis 16 erhalten wird.

18. Verwendung einer Elektrode/Elektrolytmembran-Anordnung nach Anspruch 17 in einer Lithium-Batterie, insbesondere einer Lithium-Ionen-Batterie.

19. Lithium-Batterie, umfassend eine Elektrode/Elektrolytmembran-Anordnung nach Anspruch 17.

20. Batterie nach dem vorhergehenden Anspruch, umfassend:
- eine Elektrode/Elektrolytmembran-Anordnung nach Anspruch 17, wobei die Elektrode eine lithiierte Elektrode ist, die insbesondere auf der Oberfläche einen Lithiumübergangsmetalloxid-Film, insbesondere einen Lithiumnickeloxid-Film, aufweist; und
- eine negative Elektrode in Kontakt mit der Fläche der gelierten Elektrolytmembran, die der positiven Elektrode gegenüberliegt.

## Claims

1. Process for functionalizing the electrically conductive or semiconductive surface of an electrode by electrografting of a polymeric film obtained from an ionic liquid monomer, the cation of which bears at least one electropolymerizable function.

2. Process according to the preceding claim, wherein said electrode is intended for a lithium battery, in particular said electrode is a lithium-based electrode, and more particularly has at the surface a film of lithium transition metal oxide, especially a film of lithium nickel oxide (LiNiO₂).

3. Process according to either one of the preceding claims, wherein the electrografting is performed using an electrolytic solution formed from said ionic liquid, where appropriate supplemented with a support electrolyte, especially a lithium salt such as lithium bis(trifluoromethanesulfonyl)imide.

4. Process according to any one of the preceding claims, wherein the electropolymerizable function is an activated vinyl function, in particular a methacrylate function.

5. Process according to any one of the preceding claims, wherein the cation of said ionic liquid is an aliphatic ammonium cation corresponding to the general formula (II): 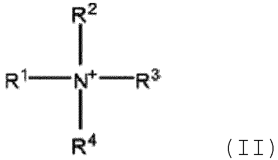 in which R¹, R², R³ and R⁴ represent, independently of each other, a hydrocarbon group, where at least one of the groups R¹, R², R³ and R⁴ is a hydrocarbon group bearing at least one electropolymerizable function, and in particular said cation is of formula (V) below: 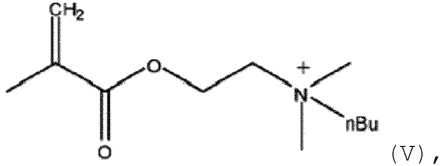 where nBu is n-butyl.
and/or the anion of said ionic liquid is a compound containing a heteroatom bearing a negative charge, this heteroatom being chosen from a nitrogen atom, a boron atom, a phosphorus atom or a chlorine atom, said anion in particular being an imide compound, and more particularly the bis(trifluoromethylsulfonyl)imide compound of formula (XI) below:

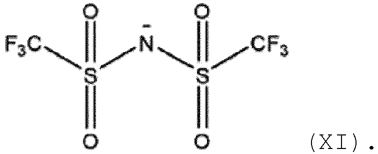

6. Process according to any one of the preceding claims, wherein the ionic liquid is N,N,N,N-n-butyldimethylmethacryloyloxyethylammonium bis(trifluoromethanesulfonyl)imide.

7. Process according to any one of the preceding claims, wherein the electrografting is performed by polarization under cyclic voltammetry conditions, by adjusting the operating conditions, especially in terms of the value of the maximum imposed potential, the sweep rate, the number of sweep cycles and/or the temperature of the electrolysis medium, to control the properties of the polymeric film formed, in particular its thickness.

8. Process according to any one of the preceding claims, comprising at least the steps consisting of:
(i) preparing an electrolytic solution comprising, or even being formed from, an ionic liquid, where appropriate supplemented with a support electrolyte, in particular a lithium salt;
(ii) electrolysing said solution in an electrolysis cell using said electrode on which the polymeric film is to be formed as the working electrode, and at least one counterelectrode, under conditions suitable for the formation of a polymeric film covalently grafted onto the surface of the electrode.

9. Structure comprising an electrode having an electrically conductive or semiconductive surface, onto which is covalently grafted a polymeric film obtained by electropolymerization from an ionic liquid monomer, the cation of which bears at least one electropolymerizable function.

10. Structure according to the preceding claim, **characterized in that** said electrode is intended for a lithium battery, in particular said electrode is a lithium-based electrode, and more particularly has at the surface a film of lithium transition metal oxide, especially a film of lithium nickel oxide.

11. Structure according to Claim 9 or 10, **characterized in that** the electrografted polymeric film has a thickness of greater than or equal to 10 nm, and advantageously less than or equal to 300 nm, preferably between 50 and 100 nm.

12. Structure according to any one of Claims 9 to 11, said polymeric film being obtained under the electrografting conditions defined in any one of Claims 3 to 8.

13. Process for preparing a gelled electrolytic membrane on the surface of an electrode, preferably of a lithium-based electrode, comprising at least the following steps:
(a) providing an electrode, preferably a lithium-based electrode, on which is covalently grafted an electrically insulating polymeric film obtained by electropolymerization from an ionic liquid monomer, the cation of which bears at least one electropolymerizable function, said polymeric film being in particular obtained under the electrografting conditions defined in any one of Claims 3 to 8;
(b) gelling the polymeric film by adding a solution of a lithium salt to a dinitrile compound of formula N=C-R-C=N, in which R is a CₙH₂ₙ hydrocarbon group, n being an integer between 1 and 6, in particular to succinonitrile or malononitrile, in particular succinonitrile; or to one or more solvents such as carbonates.

14. Process according to Claim 13, wherein the [polymer]/[dinitrile compound + lithium salt] mass ratio is between 10/90 and 90/10, preferably between 25/75 and 75/25 and more particularly between 40/60 and 60/40.

15. Process according to either one of Claims 13 and 14, wherein the lithium salt is chosen from lithium bis(trifluoromethanesulfonyl)imide, lithium bis (oxalato) borate, LiPF₆, LiClO₄, LiBF₄, LiAsF₆, LiCF₃SO₃, LiN(CF₃SO₂)₃, LiN(C₂F₅SO₂), and mixtures thereof.

16. Process according to any one of Claims 13 to 15, wherein the lithium salt has a concentration of between 0.5 and 3 mol.L⁻¹ in the dinitrile compound.

17. Electrode/electrolytic membrane assembly, comprising an electrode, preferably a lithium-based electrode, supporting a gelled electrolytic membrane obtained on conclusion of the process as defined in any one of Claims 13 to 16.

18. Use of an electrode/electrolytic membrane assembly as defined in Claim 17 in a lithium battery, in particular in a lithium-ion battery.

19. Lithium battery, comprising an electrode/electrolytic membrane assembly as defined in Claim 17.

20. Battery according to the preceding claim, comprising:
- an electrode/electrolytic membrane assembly as defined in Claim 17, wherein the electrode is a lithium-based electrode, in particular having at the surface a film of lithium transition metal oxide, especially a film of lithium nickel oxide; and
- a negative electrode in contact with the face of the gelled electrolytic membrane that is opposite the positive electrode.
